# EUROPEAN PATENT APPLICATION

(11) **EP 4 776 146 A1**
(43) Date of publication of application: **15.07.2026**
(21) Application number: 26151292.5
(22) Date of filing: 12.01.2026
(51) Int. Cl.: G06F 15/173

(54) **SETTING UP REMOTE DIRECT MEMORY ACCESS CONNECTIONS USING COALESCED APPLICATION PROGRAMMING INTERFACE CALLS**

(30) Priority: 14.01.2025 US 202519020456
(71) Applicant: Avago Technologies International Sales Pte. Limited, Singapore 768923 (SG)
(72) Inventor: Huang, Jeffrey Wei, Lake Forest, 92679 (US); Li, Benjamin Wen, Irvine, 92620 (US)
(74) Representative: Dilg, Haeusler, Schindelmann Patentanwaltsgesellschaft mbH

(57) **Abstract**

A computer is configured to set up a remote direct memory access (RDMA) connection for an application, by performing the steps of: receiving, from the application, by an RDMA driver, a sequence of API requests for setting up the RDMA connection, the API requests including information for setting up the RDMA connection; transmitting, by the RDMA driver to a NIC of the computer, in response to a last API request in the sequence, a first hardware request for setting up the RDMA connection; and generating, by the NIC in response to the first hardware request, a queue pair based on the information for setting up the RDMA connection, and also configuring, by the NIC, the queue pair based on the information for setting up the RDMA connection, the queue pair including memory space for storing receive and send requests of the application.

## Description

### Background

Direct memory access (DMA) is a technique used by a hardware device of a computer such as a network interface controller (NIC), to directly access random-access memory (RAM) independently of operating systems (OSs). In some cases, the hardware device may directly access RAM on the same computer, which is referred to as "local DMA." As an example of local DMA, an application executing on a computer may store data at a memory location that is known by a NIC on the same computer, so the NIC may then perform a DMA operation to read the data from that location. Similarly, the NIC may perform a DMA operation to store data at a memory location that is known by the application, so the application may then read the data from that location. Such DMA operations bypass the CPUs of the computer, which do not manage the data transfers between the RAM and the NIC.

In other cases, a NIC may also use DMA to access RAM on a different computer, which is referred to as "remote DMA" (RDMA). For example, a first application executing on a first computer may use RDMA to send data to a second application executing on a second computer. To do so, the first application may store data in its RAM to be read by a first NIC on the first computer through a DMA operation. Then, the first NIC may transmit the data to a second NIC on the second computer. Finally, the second NIC may perform a DMA operation to store the data in its RAM to be read by the second application. Similarly, the first application may use RDMA to receive data from the second application. To do so, the second NIC similarly performs a DMA operation to read data from its RAM to transmit to the first NIC. The first NIC then performs a DMA operation to store the data in its RAM to be read by the first application.

RDMA offers various advantages over traditional data transfer techniques. Traditionally, OSs executing on CPUs manage the movement of data between RAMs and NICs. Such management involves significant overhead for the OSs, including copying data between various buffers. In contrast, by allowing NICs to directly access RAM without involvement from OSs, RDMA eliminates such overhead, reducing the latency and increasing the throughput of data transfers. Furthermore, by bypassing the OSs, RDMA reduces the load on CPUs, which may then focus on other computational tasks.

To set up an RDMA connection between two computers, depending on the RDMA protocol being used, applications issue a series of application programming interface (API) requests. For example, if the applications use the InfiniBand^{®} protocol, which is an RDMA protocol developed by the InfiniBand Trade Association (IBTA), the API requests are referred to as "verbs." In response to the API requests, the NICs perform various processing for setting up the RDMA connection, and the NICs provide to the applications, responses to the API requests. Depending on how much time it takes for the API requests to be communicated to NICs, for the NICs to perform the required processing for the API requests, and for the NICs to respond to the API requests, setting up RDMA connections may be prohibitively time-consuming, e.g., hundreds of microseconds per connection. This especially becomes problematic as the number of RDMA connections to set up by a NIC scales up, e.g., to thousands of connections at one time, leading to significant latency in setting up the connections. A more efficient system for setting up RDMA connections is desired.

### Summary

One or more embodiments provide a computer including a processor, first memory, and a first NIC, wherein the computer is configured to perform the following steps to set up an RDMA connection for an application executing on the computer to use for accessing second memory of a separate computer that includes a second NIC. The steps include receiving, from the application, by an RDMA driver executing on the processor, a sequence of API requests for setting up the RDMA connection, the API requests including information for setting up the RDMA connection; and transmitting, by the RDMA driver to the first NIC, in response to a last API request in the sequence, a first hardware request for setting up the RDMA connection, the first hardware request containing the information for setting up the RDMA connection, and the first hardware request being generated by the RDMA driver based on each of the API requests in the sequence.

The steps further include generating, by the first NIC in response to the first hardware request, a queue pair in local memory of the first NIC based on the information for setting up the RDMA connection, and also configuring, by the first NIC, the queue pair based on the information for setting up the RDMA connection, the queue pair including memory space for storing receive and send requests of the application; and providing, by the first NIC to the application in response to a receive request from the application stored in the queue pair, first data from the second memory that the first NIC receives from the second NIC. Further embodiments include a method comprising the above steps and a non-transitory computer-readable storage medium comprising instructions that cause a computer to carry out the above steps.

### Brief Description of the Drawings

Figure 1 is a block diagram of a computer system in which embodiments may be implemented.
Figure 2 is a flow diagram of a method that may be performed by an RDMA driver executing on a computer of the computer system, to provide hardware requests to a NIC for setting up an RDMA connection, according to some embodiments.
Figure 3 is a flow diagram of a method that may be performed by the NIC to set up the RDMA connection based on the hardware requests, according to some embodiments.
Figure 4 is a flow diagram of a method that may be performed by the RDMA driver and the NIC to perform a receive work request for an application, according to some embodiments.
Figure 5 is a flow diagram of a method that may be performed by the RDMA driver and the NIC to perform a send work request for the application, according to some embodiments.

### Detailed Description

Techniques are described for setting up RDMA connections. According to embodiments, an application executing on a first computer issues several API requests for setting up an RDMA connection to access RAM on a second computer. The first computer includes a software component separate from the application, referred to herein as an "RDMA driver." The RDMA driver receives the API requests and issues corresponding hardware requests to a NIC on the first computer for setting up the RDMA connection.

According to embodiments, the RDMA driver does not simply issue a hardware request to the NIC each time it receives an API request. Instead, the RDMA driver waits until it receives API requests that are sufficient for setting up an RDMA connection that it is ready to be used by the application for accessing the RAM on the second computer. For example, the RDMA driver may wait until it receives sufficient API requests for the RDMA connection to be ready for being used specifically for receiving data. In many cases, such point is not reached until after the application issues several API requests. Until such point, the RDMA driver caches information received from the application.

For example, if the application uses InfiniBand,^{®} the application typically first issues a verb for generating a "queue pair" in the NIC. The InfiniBand^{®} Architecture Specification is incorporated herein by reference in its entirety. A queue pair is a collection of data structures that include memory space for storing requests from the application to send and receive data. A queue pair is associated with a "state," which is stored in the NIC. When the queue pair is first generated, it is initially in a "reset" state. The reset state is a state that identifies the queue pair as having just been generated or having been reset, e.g., for reconfiguration. The application then typically issues various verbs for configuring the queue pair and transitioning it to different states.

The application typically issues a verb for modifying the queue pair to transition to an "initialized" state. The initialized state is a state that identifies the queue pair as having been configured beyond the reset state, but as not yet being ready to be used by the application for accessing data. The application typically then issues a verb for modifying the queue pair to transition to a "ready-to-receive" (RTR) state. The RTR state is a state that identifies the queue pair as being ready to be used by the application for receiving data. The application typically then issues a verb for modifying the queue pair to transition to a "ready-to-send" (RTS) state. The RTS state is a state that identifies the queue pair as being ready to be used by the application for sending data. As used herein, states such as the reset, initialized, RTR, and RTS states may refer to InfiniBand^{®} states or may refer to states of other RDMA protocols.

In the above example, the RDMA connection may not be ready to be used until after the application issues the third verb for modifying the queue pair to transition to the RTR state. Accordingly, when the RDMA driver receives the first two verbs, the RDMA driver may cache information from those verbs. Then, when the RDMA driver receives the third verb, the RDMA driver may generate a single hardware request for generating a queue pair and for modifying the queue pair to transition to the initialized and RTR states. Such hardware request may include information from the first, second, and third API requests. The RDMA driver may then transmit that single hardware request to the NIC for processing.

By coalescing multiple API requests from the application, embodiments reduce the amount of time needed for setting up an RDMA connection. For example, the RDMA driver transmits less hardware requests to the NIC. Similarly, due to the reduced number of hardware requests, the NIC provides less responses to hardware requests. The latency resulting from communications between a CPU and NIC are thus significantly reduced.

Additionally, the coalescing of API requests reduces the amount of time needed by the NIC for processing hardware requests. For example, each hardware request includes command headers, comprising information such as an identifier of the application and a location in RAM to write a response to. Reducing the number of hardware requests decreases the amount of command headers to be read by the NIC. Furthermore, decreasing the amount of command headers further decreases the total amount of data to communicate to the NIC. These and further aspects of the invention are discussed below with respect to the drawings.

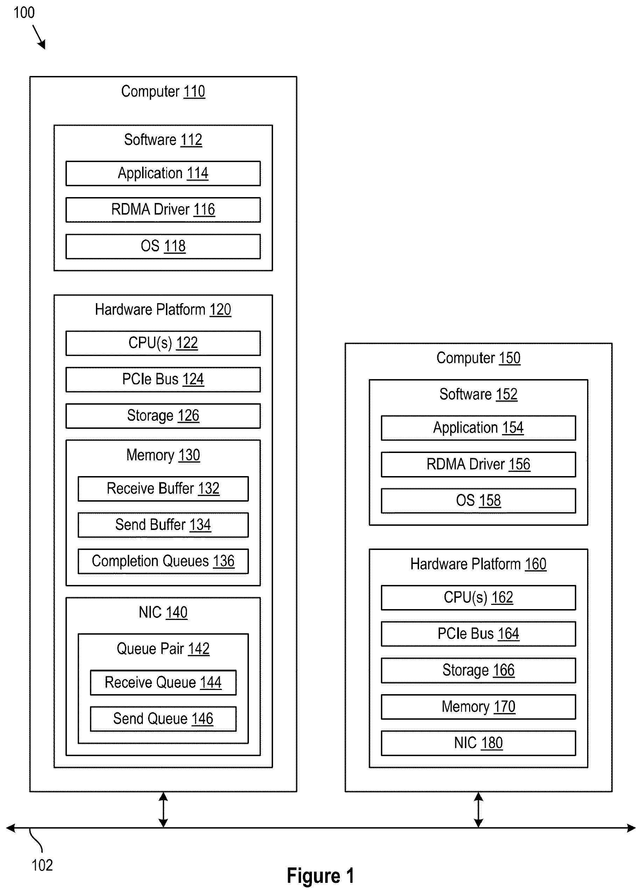

Figure 1 is a block diagram of a computer system 100 in which embodiments may be implemented. Computer system 100 includes a computer 110 and a computer 150, which are examples of computers that may set up an RDMA connection. For example, an application 114 executing on computer 110 may communicate with an application 154 executing on computer 150 across the RDMA connection. Specifically, across the RDMA connection, application 114 may receive data that application 154 stores in memory 170 of computer 150. Application 114 may also use the RDMA connection to send data to computer 150 to be stored in memory 170 and then read by application 154. However, embodiments are not limited as such. For example, application 114 may use the RDMA connection simply for accessing memory 170, i.e., for storing data therein and retrieving data therefrom.

Computer 110 is constructed on a hardware platform 120 such as an x86 architecture platform. Hardware platform 120 includes components of a computer, such as one or more central processing units (CPUs) 122, a Peripheral Component Interconnect Express (PCIe) bus 124, local storage 126 such as one or more magnetic drives or solid-state drives (SSDs), memory 130 such as RAM, and a NIC 140. CPU(s) 122 are configured to execute instructions such as executable instructions that perform one or more operations described herein, which may be stored in memory 130. PCIe bus 124 is a communication system comprising wires or channels for connecting peripheral devices of computer 110, e.g., connecting NIC 140 to CPU(s) 122 and memory 130.

When the RDMA connection is set up, a memory location that is accessible to both application 114 and NIC 140, is reserved in memory 130 for a receive buffer 132. Application 114 reads from read receive buffer 132, data retrieved from memory 170 of computer 150. Additionally, a memory location accessible to both application 114 and NIC 140, is reserved for a send buffer 134. Application 114 stores in send buffer 134, data to be stored in memory 170.

According to some embodiments, another memory location that is accessible to both application 114 and NIC 140, is reserved for completion queues 136. Completion queues 136 may be used for application 114 to track the statuses of requests to receive or send data across the RDMA connection. As used herein, a request to receive data using the RDMA connection is referred to as a "receive work request," while a request to send data using the RDMA connection is referred to as a "send work request." Completion queues 136 comprise a pair of data structures, including a receive completion queue for tracking the status of receive work requests and a send completion queue for tracking the status of send work requests. NIC 140 may store, in completion queues 136, messages indicating such statuses. Such messages are referred to herein as "completion entries."

NIC 140 enables computer 110 to communicate with other devices such as computer 150, e.g., over a network 102 such as a local area network (LAN). When the RDMA connection is set up, NIC 140 includes a queue pair 142 in local memory within NIC 140. Queue pair 142 is a collection of data structures for storing receive and send work requests from application 114. Queue pair 142 includes a receive queue 144, which is a data structure for storing receive work requests. Queue pair 142 also includes a send queue 146, which is a data structure for storing send work requests. Queue pair 142 is associated with receive buffer 132, send buffer 134, and completion queues 136. Accordingly, receive buffer 132, send buffer 134, and completion queues 136 are used for performing the work requests stored in queue pair 142.

Hardware platform 120 supports software 112. Software 112 includes application 114, an RDMA driver 116, and an OS 118. Application 114 is a computer program that may be launched on computer 110, such as for email or office productivity services. RDMA driver 116 is software that is configured to facilitate the setting up of the RDMA connection and usage thereof. For example, although illustrated as being separate from OS 118, RDMA driver 116 may be a kernel-mode driver that executes within OS 118. OS 118 is system software that manages resources of software 112 and hardware platform 120, including for application 114 and RDMA driver 116.

Computer 150 is constructed on a hardware platform 160 such as an x86 architecture platform. Similar to hardware platform 120, hardware platform 160 includes components of a computer, such as one or more CPUs 162, a PCIe bus 164, local storage 166, memory 170 such as RAM, and a NIC 180. CPU(s) 162 are configured to execute instructions such as executable instructions that perform one or more operations described herein, which may be stored in memory 170. PCIe bus 164 is a communication system comprising wires or channels for connecting peripheral devices of computer 150, e.g., connecting NIC 180 to CPU(s) 162 and memory 170. NIC 180 enables computer 150 to communicate with other devices such as computer 110, e.g., over network 102.

In the example of computer system 100, memory 170 and NIC 180 may be configured similarly to memory 130 and NIC 140 of computer 110. For example, memory 170 may include receive and send buffers and completion queues (not shown) to be used by application 154 and NIC 180. Additionally, NIC 180 may include a queue pair (not shown), including a receive queue and a send queue, to be used for the RDMA connection. When NIC 140 processes a receive work request to receive data that is currently stored in memory 170, NIC 180 may process a send work request to retrieve that data and send it to computer 110 to be stored in memory 130. Similarly, when NIC 140 processes a send work request to send data to computer 150 to be stored in memory 170, NIC 180 may process a receive work request to receive that data and store it in memory 170.

Hardware platform 160 supports software 152. Software 152 may include application 154, an RDMA driver 156, and an OS 158. Application 154 is a computer program that may be launched on computer 150, such as for email or office productivity services. RDMA driver 156 is software that is configured to facilitate the setting up of the RDMA connection and usage thereof. For example, although illustrated as being separate from OS 158, RDMA driver 156 may be a kernel-mode driver that executes within OS 158. OS 158 is system software that manages resources of software 152 and hardware platform 160, including for application 154 and RDMA driver 156.

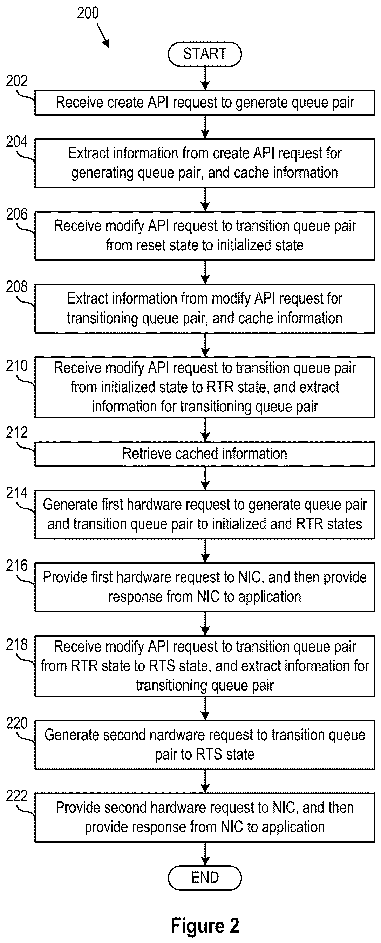

Figure 2 is a flow diagram of a method 200 that may be performed by an RDMA driver for providing hardware requests to a NIC to set up an RDMA connection, according to some embodiments. For example, method 200 will be discussed with respect to computer 110. At step 202, RDMA driver 116 receives, from application 114, a create API request to generate queue pair 142. For example, if application 114 uses InfiniBand,^{®} the create API request includes the verb "ibv_create_qp." It should be noted that when queue pair 142 is later generated, it will initially be in the reset state.

At step 204, RDMA driver 116 extracts information from the create API request for generating queue pair 142. In the case of the verb ibv_create_qp, the information may specify a "protection domain" that permits queue pair 142 to access a "memory region" in memory 130 associated with receive buffer 132 and send buffer 134. As another example, the information may specify attributes such as pointers to completion queues 136. In the example of method 200, even after NIC 140 later generates queue pair 142 according to the create API request, the RDMA connection will not yet be ready to be used, e.g., by application 114 to receive data stored in memory 170 or send data to be stored in memory 170. Accordingly, RDMA driver 116 does not yet generate a hardware request for NIC 140. Instead, RDMA driver 116 caches the information from the create API request, e.g., in a cache of memory 130.

At step 206, RDMA driver 116 receives, from application 114, a modify API request to transition queue pair 142 from the reset state to the initialized state. For example, if application 114 uses InfiniBand,^{®} the modify API request includes the verb "ibv_modify_qp." At step 208, RDMA driver 116 extracts information from the modify API request for transitioning the queue pair to the initialized state. In the case of the verb ibv_modify_qp, the information may specify an identifier of queue pair 142 and may specify the initialized state as a desired state for queue pair 142. It should be noted that although queue pair 142 has not yet been created by NIC 140, the identifier for queue pair 142 may already have been assigned by firmware of NIC 140 and communicated by NIC 140 to RDMA driver 116 and then by RDMA driver 116 to application 114.

Additionally, for example, the information may specify other arguments for configuring queue pair 142. Such arguments may include, e.g., a port number of NIC 140 to be used for the RDMA connection. It should be noted that, in the example of method 200, even after NIC 140 later configures queue pair 142 to transition to the initialized state, the RDMA connection still will not be ready to be used, e.g., by application 114 to receive or send data. Accordingly, RDMA driver 116 does not yet generate a hardware request for NIC 140. Instead, RDMA driver 116 caches the information from the modify API request, e.g., in the cache of memory 130.

At step 210, RDMA driver 116 receives a modify API request from application 114 to transition queue pair 142 from the initialized state to the RTR state. As mentioned above, if application 114 uses InfiniBand,^{®} the modify API request includes ibv_modify_qp. RDMA driver 116 then extracts information from the modify API request for transitioning the queue pair to the RTR state. In the case of the verb ibv_modify_qp, the information may specify the identifier of queue pair 142 and may specify the RTR state as a desired state for queue pair 142.

Additionally, for example, the information may specify other arguments for configuring queue pair 142. Such arguments may include, e.g., an identifier of the queue pair of NIC 180, i.e., an identifier of the remote end of the RDMA connection for receiving data from. The information may also specify to update an access flag of queue pair 142 to allow for writing data to receive buffer 132. It should be noted that, in the example of method 200, after NIC 140 later configures queue pair 142 to transition to the RTR state, the RDMA connection will be ready to be used by application 114 to receive data. Accordingly, after step 210, RDMA driver 116 determines that it is time to generate a hardware request for NIC 140 instead of merely caching the information from the latest modify API request.

At step 212, RDMA driver 116 retrieves cached information of previous API requests, e.g., from the cache of memory 130. Such cached information includes that information which was extracted and cached at steps 204 and 208. At step 214, RDMA driver 116 generates a first hardware request to generate queue pair 142 and transition queue pair 142 from the reset state to the initialized state, and then to the RTR state. RDMA driver 116 generates the first hardware request to include the information extracted from each of the API requests received from application 114. The first hardware request also includes command headers, comprising information such as an identifier of application 114 and a location in memory 130 at which NIC 140 is to write a response to the first hardware request.

Furthermore, depending on a type of NIC 140, e.g., a vendor and/or model of NIC 140, RDMA driver 116 generates the first hardware request to be compatible with NIC 140. For example, instructions from the information in the API requests may be high-level instructions. RDMA driver 116 may translate such high-level instructions into low-level hardware instructions of a different format that is compatible with NIC 140. RDMA driver 116 may generate the first hardware request to include such translated instructions.

At step 216, RDMA driver 116 provides the first hardware request to NIC 140. At the hardware level, CPU(s) 122 transmit the first hardware request to NIC 140 across PCIe bus 124. Later, RDMA driver 116 receives, from NIC 140, a response to the first hardware request. The response indicates whether NIC 140 successfully performed the instructions from the first hardware request. At the hardware level, NIC 140 transmits such response to CPU(s) 122 across PCIe bus 124. RDMA driver 116 then forwards the response to application 114. Assuming the response indicates success, the RDMA connection is set up for receiving data, and method 200 moves to step 218.

At step 218, RDMA driver 116 receives, from application 114, a modify API request to transition queue pair 142 from the RTR state to the RTS state. As mentioned above, if application 114 uses InfiniBand,^{®} the modify API request includes ibv_modify_qp. RDMA driver 116 then extracts information from the modify API request for transitioning the queue pair to the RTS state. In the case of the verb ibv_modify_qp, the information may specify the identifier of queue pair 142 and may specify the RTS state as a desired state for queue pair 142.

Additionally, for example, the information may specify other arguments for configuring queue pair 142. Such arguments may include, e.g., an identifier of the queue pair of NIC 180 for sending data to. Such arguments may also specify to update an access flag of queue pair 142 to allow for reading data from send buffer 134. In the example of method 200, after NIC 140 later configures queue pair 142 to transition to the RTS state, the RDMA connection will be ready to be used by application 114 to send data (in addition to receiving data). Accordingly, after step 218, RDMA driver 116 determines that it is time to generate a hardware request for NIC 140 instead of merely caching the information from the latest modify API request.

At step 220, RDMA driver 116 generates a second hardware request to transition queue pair 142 from the RTR state to the RTS state. RDMA driver 116 generates the second hardware request to include the information extracted from the latest modify API request. Like the first hardware request, the second hardware request includes command headers, comprising information such as an identifier of application 114 and a location in memory 130 at which NIC 140 is to write a response to the second hardware request. Furthermore, like the first hardware request, depending on a type of NIC 140, RDMA driver 116 generates the second hardware request to be compatible with NIC 140. The second hardware request may thus include low-level hardware instructions translated from high-level instructions in the latest modify API request.

At step 222, RDMA driver 116 provides the second hardware request to NIC 140. Like the first hardware request, CPU(s) 122 transmit the second hardware request to NIC 140 across PCIe bus 124. Later, RDMA driver 116 receives, from NIC 140, a response to the second hardware request. The response indicates whether NIC 140 successfully performed the instructions from the second hardware request. Like the response to the first hardware request, NIC 140 transmits the response to the second hardware request, to CPU(s) 122 across PCIe bus 124. RDMA driver 116 then forwards the response to application 114. Assuming the response indicates success, the RDMA connection is set up for sending data (in addition to receiving data). After step 222, method 200 ends.

Although method 200 is discussed with respect to InfiniBand,^{®} embodiments are not limited as such. RDMA driver 116 may receive a plurality of API requests according to other RDMA protocols and cache information from such requests. RDMA driver 116 eventually receives an API request for causing the RDMA connection to become usable, e.g., for receiving or sending data. At such point, RDMA driver 116 may retrieve the cached information and generate a hardware request including all the information from the API requests.

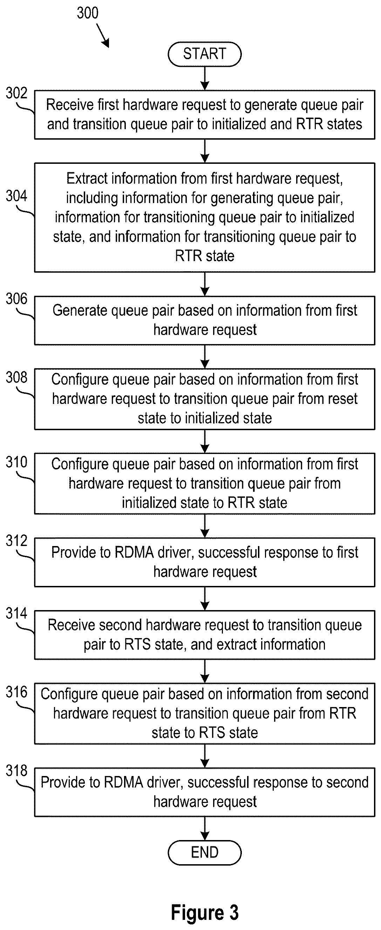

Figure 3 is a flow diagram of a method 300 that may be performed by a NIC to set up an RDMA connection based on hardware requests, according to some embodiments. For example, method 300 will be discussed with respect to computer 110. At step 302, NIC 140 receives, from RDMA driver 116, a first hardware request to generate queue pair 142 and transition queue pair 142 from the reset state to the initialized state, and then to the RTR state.

At step 304, NIC 140 processes the first hardware request. Such processing includes parsing command headers in the first hardware request such as an identifier of application 114. Such processing further includes extracting information from the first hardware request. Such information includes information for generating queue pair 142, information for transitioning queue pair 142 from the reset state to the initialized state, and information for transitioning queue pair 142 from the initialized state to the RTR state.

At step 306, NIC 140 generates queue pair 142 in its local memory, based on information from the first hardware request. For example, NIC 140 may generate queue pair 142 based on information from a create API request from application 114, such information being included in the first hardware request. For example, as part of generating queue pair 142, NIC 140 may store, in its local memory, an identifier for a protection domain associated with queue pair 142, the protection domain permitting queue pair 142 to access a memory region associated with receive buffer 132 and send buffer 134. As another example, NIC 140 may store, in its local memory, pointers to completion queues 136. After step 306, queue pair 142 is in the reset state.

At step 308, NIC 140 configures queue pair 142 based on information from the first hardware request, to transition queue pair 142 from the reset state to the initialized state. For example, NIC 140 may configure queue pair 142 based on information from a modify API request from application 114, such information being included in the first hardware request. For example, as part of the configuration, NIC 140 may store, in its local memory, a port number of NIC 140 to be used for the RDMA connection. NIC 140 may also update a state machine in its local memory that is associated with queue pair 142, to indicate that queue pair 142 is in the initialized state.

At step 310, NIC 140 configures queue pair 142 based on information from the first hardware request, to transition queue pair 142 from the initialized state to the RTR state. For example, NIC 140 may configure queue pair 142 based on information from a modify API request from application 114, such information being included in the first hardware request. For example, as part of the configuration, NIC 140 may store, in its local memory, an identifier of the queue pair of NIC 180 for receiving data from. NIC 140 may also update an access flag in its local memory that is associated with queue pair 142, to allow for writing data to receive buffer 132. NIC 140 may also update a state machine in its local memory that is associated with queue pair 142, to indicate that queue pair 142 is in the RTR state.

At step 312, NIC 140 provides, to RDMA driver 116, a successful response to the first hardware request. For example, NIC 140 may store the response in a location in memory 130 identified by command headers of the first hardware request. The response indicates that NIC 140 successfully performed the instructions from the first hardware request. The response may also include other information such as an acknowledgment that queue pair 142 is in the RTR state.

At step 314, NIC 140 receives, from RDMA driver 116, a second hardware request to transition queue pair 142 from the RTR state to the RTS state. NIC 140 then processes the second hardware request. Such processing includes parsing command headers in the second hardware request such as an identifier of application 114. Such processing further includes extracting information from the second hardware request for transitioning queue pair 142 from the RTR state to the RTS state.

At step 316, NIC 140 configures queue pair 142 based on information from the second hardware request, to transition queue pair 142 from the RTR state to the RTS state. For example, NIC 140 may configure queue pair 142 based on information from a modify API request from application 114, such information being included in the second hardware request. For example, as part of the configuration, NIC 140 may store, in its local memory, an identifier of the queue pair of NIC 180 for sending data to. NIC 140 may also update an access flag in its local memory that is associated of queue pair 142, to allow for reading data from send buffer 134. NIC 140 may also update the state machine in its local memory that is associated with queue pair 142, to indicate that queue pair 142 is in the RTS state.

At step 318, NIC 140 provides, to RDMA driver 116, a successful response to the second hardware request. For example, NIC 140 may store the response in a location in memory 130 identified by command headers of the second hardware request. The response indicates that NIC 140 successfully performed the instructions from the second hardware request. The response may also include other information such as an acknowledgment that queue pair 142 is in the RTS state. After step 318, method 300 ends.

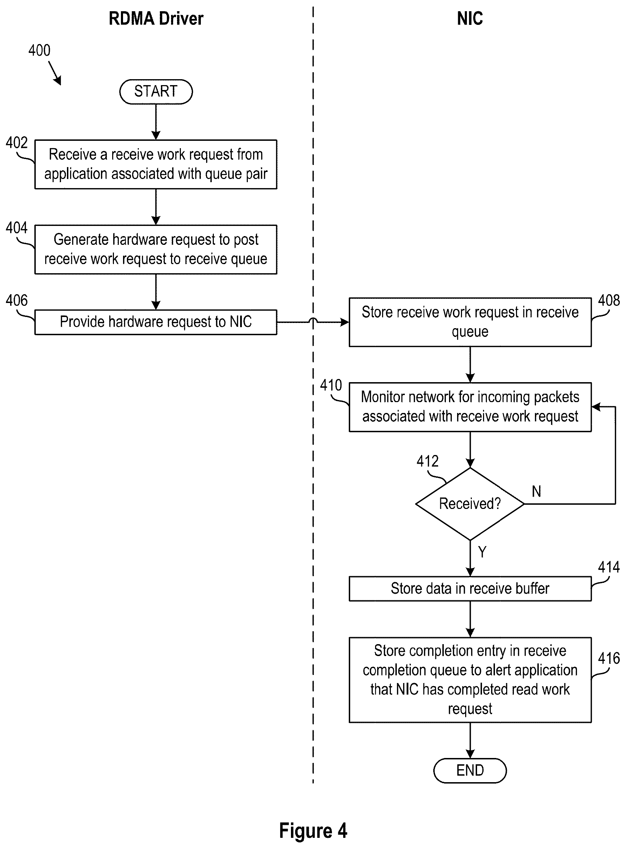

Figure 4 is a flow diagram of a method 400 that may be performed by an RDMA driver and NIC to perform a receive work request for an application, according to some embodiments. For example, method 400 will be discussed with respect to computer system 100. Method 400 may be performed once queue pair 142 is in the RTR state, as discussed above in conjunction with Figure 3. At step 402, RDMA driver 116 receives a receive work request from application 114, e.g., to receive data that was stored in memory 170 by application 154. For example, if application 114 uses InfiniBand,^{®} the API request includes the verb "ibv_post_recv."

At step 404, RDMA driver 116 generates a hardware request to post a receive work request to receive queue 144, i.e., to store the receive work request in receive queue 144. RDMA driver 116 generates the hardware request based on information from the API request. Additionally, RDMA driver 116 generates the hardware request to be compatible with NIC 140, e.g., based on a vendor and/or model of NIC 140. At step 406, RDMA driver 116 provides the hardware request to NIC 140, which involves CPU(s) 122 transmitting the hardware request to NIC 140 across PCIe bus 124. At step 408, in response to the hardware request, NIC 140 stores the receive work request in receive queue 144.

At step 410, NIC 140 monitors network 102 for incoming packets associated with the receive work request. For example, the receive work request may specify an address of receive buffer 132 for storing incoming data. The receive work request may also specify other information such as a number of bytes of data that are expected to be received, i.e., an expected length of the data. Incoming packets may be received in various manners.

For example, if application 114 uses InfiniBand,^{®} network 102 may include an InfiniBand^{®} subnet therein for RDMA communication. The InfiniBand^{®} subnet is a logical grouping of devices such as computers 110 and 150, that provides a high-performance, low-latency interconnect for RDMA communications. As another example, regardless of which RDMA protocol application 114 uses, network 102 may include an Ethernet fabric therein for RDMA communication. The Ethernet fabric is a network architecture that interconnects Ethernet switches. For example, NICs 140 and 180 may communicate using RDMA over Converged Ethernet (RoCE), which is a network protocol allowing for RDMA communications over an Ethernet fabric, e.g., of network 102.

At step 412, if NIC 140 has not yet received the expected packets, method 400 returns to step 410, and NIC 140 continues to monitor network 102 for the incoming packets. Otherwise, if NIC 140 has received the expected packets, e.g., across an InfiniBand^{®} subnet of network 102 or across an Ethernet fabric of network 102 according to RoCE, method 400 moves to step 414. Such packets may include data read from memory 170 by NIC 180 through a DMA operation. At step 414, NIC 140 performs a DMA operation to store the data in receive buffer 132, such data being extracted by NIC 140 from the received packets.

At step 416, NIC 140 performs another DMA operation to store a completion entry message in the receive queue of completion queues 136. This message alerts application 114 that NIC 140 has completed the read work request and stored the data in receive buffer 132. After step 416, method 400 ends, and application 114 may read the data from receive buffer 132. Although method 400 is discussed with respect to InfiniBand,^{®} embodiments are not limited as such. RDMA driver 116 and NIC 140 may perform steps according to other RDMA protocols to acquire data from memory 170 to provide to application 114.

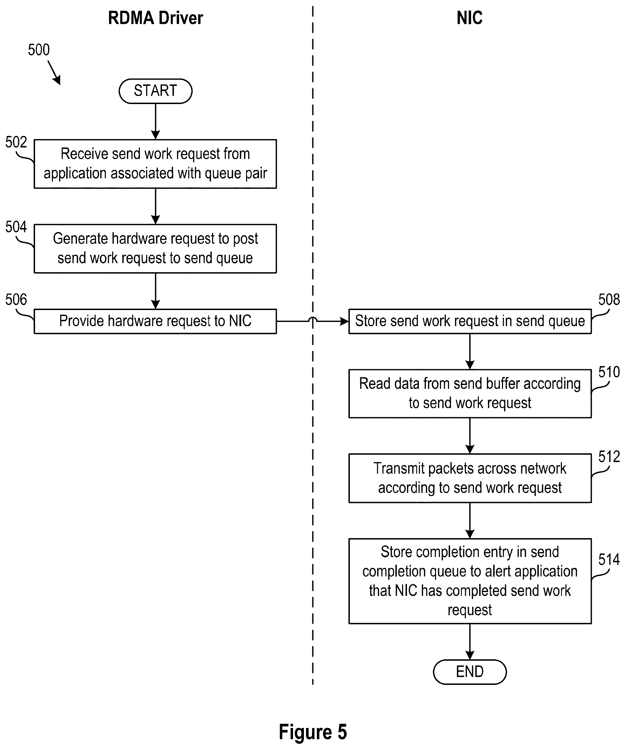

Figure 5 is a flow diagram of a method 500 that may be performed by an RDMA driver and NIC to perform a send work request for an application, according to some embodiments. For example, method 500 will be discussed with respect to computer system 100. Method 500 may be performed once queue pair 142 is in the RTS state, as discussed above in conjunction with Figure 3. At step 502, RDMA driver 116 receives a send work request from application 114, e.g., to send data to computer 150 to be stored in memory 170 for application 154. For example, if application 114 uses InfiniBand,^{®} the API request includes the verb "ibv_post_send."

At step 504, RDMA driver 116 generates a hardware request to post a send work request to send queue 146, i.e., to store the send work request in send queue 146. RDMA driver 116 generates the hardware request based on information from the API request. Additionally, RDMA driver 116 generates the hardware request to be compatible with NIC 140, e.g., based on a vendor and/or model of NIC 140. At step 506, RDMA driver 116 provides the hardware request to NIC 140, which involves CPU(s) 122 transmitting the hardware request to NIC 140 across PCIe bus 124.

At step 508, in response to the hardware request, NIC 140 stores the send work request in send queue 146. At step 510, NIC 140 performs a DMA operation to read data from send buffer 134 according to the send work request. For example, the send work request may specify an address of send buffer 134 and other information such as the number of bytes of the data to be sent, i.e., the length of the data. At step 512, NIC 140 generates packets including the data and transmits the packets across network 102 to NIC 180 according to the send work request. For example, the send work request may specify a destination address of memory 170, which NIC 140 includes in the packets. For example, NIC 140 may transmit the packets across an InfiniBand^{®} subnet of network 102 or an Ethernet fabric of network 102 according to RoCE. After step 512, NIC 180 may perform a DMA operation to store the data from the transmitted packets at the destination address of memory 170, to be read by application 154.

At step 514, NIC 140 performs another DMA operation to store a completion entry message in the send queue of completion queues 136. This alerts application 114 that NIC 140 has completed the send work request and transmitted the data to NIC 180 to be stored in memory 170. After step 514, method 500 ends. Although method 500 is discussed with respect to InfiniBand,^{®} embodiments are not limited as such. RDMA driver 116 and NIC 140 may perform steps according to other RDMA protocols to send data to memory 170.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of setting up a remote direct memory access, RDMA, connection for an application executing on a computer that includes a processor, first memory, and a first network interface controller, NIC, wherein the application uses the RDMA connection for accessing second memory of a separate computer that includes a second NIC, the method comprising:
receiving, from the application, by an RDMA driver executing on the processor, a sequence of application programming interface, API requests for setting up the RDMA connection, wherein the API requests include information for setting up the RDMA connection;
transmitting, by the RDMA driver to the first NIC, in response to a last API request in the sequence, a first hardware request for setting up the RDMA connection, wherein the first hardware request contains the information for setting up the RDMA connection, and the first hardware request is generated by the RDMA driver based on each of the API requests in the sequence;
generating, by the first NIC in response to the first hardware request, a queue pair in local memory of the first NIC based on the information for setting up the RDMA connection, and also configuring, by the first NIC, the queue pair based on the information for setting up the RDMA connection, wherein the queue pair includes memory space for storing receive and send requests of the application; and
providing, by the first NIC to the application in response to a receive request from the application stored in the queue pair, first data from the second memory that the first NIC receives from the second NIC.

2. The method of claim 1, wherein the information for setting up the RDMA connection includes information for generating the queue pair, the method further comprising:
extracting, by the RDMA driver, the information for generating the queue pair, from one of the API requests in the sequence that the RDMA driver receives before the last API request;
caching, by the RDMA driver, the information for generating the queue pair; and
retrieving, by the RDMA driver, the cached information for generating the queue pair, wherein the RDMA driver generates the first hardware request to include the retrieved information for generating the queue pair.

3. The method of any one of the preceding claims, wherein
the information for setting up the RDMA connection includes information for modifying the queue pair to transition to an initialization state, the method further comprising:
extracting, by the RDMA driver, the information for modifying the queue pair, from one of the API requests in the sequence that the RDMA driver receives before the last API request;
caching, by the RDMA driver, the information for modifying the queue pair; and
retrieving, by the RDMA driver, the cached information for modifying the queue pair, wherein the RDMA driver generates the first hardware request to include the retrieved information for modifying the queue pair.

4. The method of any one of the preceding claims, wherein
the information for setting up the RDMA connection includes information for modifying the queue pair to transition to a ready-to-receive, RTR, state, the method further comprising:
extracting, by the RDMA driver, the information for modifying the queue pair, from the last API request, wherein the RDMA driver generates the first hardware request to include the extracted information for modifying the queue pair.

5. The method of any one of the preceding claims, further comprising:
translating, by the RDMA driver based on a type of the first NIC, instructions from the sequence of API requests into instructions of a different format that is compatible with the first NIC, wherein the RDMA driver generates the first hardware request to include the translated instructions.

6. The method of any one of the preceding claims, further comprising:
providing, by the first NIC to the application, the first data by performing a DMA operation, wherein the DMA operation includes storing, by the first NIC, the first data in a receive buffer of the first memory, and the receive buffer is associated with the queue pair.

7. The method of any one of the preceding claims, further comprising:
transmitting, by the first NIC to the second NIC in response to a send request from the application stored in the queue pair, second data received from the application to be stored in the second memory.

8. The method of any one of the preceding claims, further comprising:
receiving, by the first NIC from the application, the second data by performing a DMA operation, wherein the DMA operation includes reading, by the first NIC, the second data from a send buffer of the first memory, and the send buffer is associated with the queue pair.

9. The method of any one of the preceding claims, further comprising:
storing, by the first NIC, a message in a completion queue of the first memory to alert the application that the first NIC has completed the receive request, wherein the completion queue is accessible to the application.

10. The method of any one of the preceding claims, further comprising:
receiving, according to RDMA over Converged Ethernet, RoCE, the first data from the second NIC across an Ethernet fabric of a network.

11. A computer including a processor, first memory, and a first network interface controller, NIC, wherein the computer is configured to control and/or carry out a method as set forth in any one of the preceding method claims.

12. A non-transitory, computer-readable medium comprising instructions that are executable in a computer that includes a processor, first memory, and a first network interface controller (NIC), wherein the instructions when executed cause the computer to control and/or carry out a method as set forth in any one of the preceding method claims.
